# FASCICULE DE BREVET EUROPEEN

(11) **EP 1 271 798 B1**
(45) Date de publication et mention de la délivrance du brevet: **28.11.2007**
(21) Numéro de dépôt: 02077410.5
(22) Date de dépôt: 18.06.2002
(51) Int. Cl.: H04B 1/707

(54) **Station de radio avec récepteur pour réception multitrajet, et méthode de réception correspondante**
Funkstation mit Empfänger für Mehrwegempfang und entsprechendes Empfangsverfahren
Radio station with receiver for multi-path reception and corresponding receiving method

(30) Priorité: 26.06.2001 FR 0108418
(43) Date de publication de la demande: 02.01.2003
(73) Titulaire: NXP B.V., 5656 AG Eindhoven (NL)
(72) Inventeur: Paviot, Olivier, 75008 Paris (FR)
(74) Mandataire: Pennings, Johannes

(56) Documents cités:
- EP-A- 0 851 600

## Description

L'invention concerne une station de radio comportant un récepteur pour recevoir des informations transmises par symboles selon une pluralité de trajets.

L'invention concerne aussi un procédé de réception.

L'invention trouve des applications importantes pour des stations fonctionnant selon le mode CDMA. Dans ce mode, on traite les informations provenant de l'émetteur et reçues en suivant des chemins de durées différentes. Les récepteurs fonctionnant dans ce mode, connus sous le nom de récepteur Rake, traitent les données de ces informations en tenant compte d'une pluralité de ces trajets. Chacun de ces trajets traités nécessite une ligne de retard.

Une station de ce genre est connue des documents de brevet US 5 537 438 et EP-A 0851 600. Le premier document concerne une amélioration de la réception de blocs d'information en utilisant des procédés d'égalisation. Le deuxième document propose une synchronisation des symboles reçus.

L'invention propose une station du genre mentionné dans le préambule qui permet aussi d'améliorer la réception des données en utilisant un autre procédé que celui de l'égalisation. En outre, l'invention permet de résoudre un problème aux limites associées à tout système possédant une structure de bancs de registres pour aligner des signaux respectifs propres aux trajets respectifs.

La revendication 1 définit une station de radio selon invention.

La description suivante, faite en regard des dessins ci-annexés, le tout donné à titre d'exemples non limitatifs fera bien comprendre comment l'invention peut être réalisée. Sur les dessins :
La figure 1 montre un appareil conforme à l'invention faisant partie d'un système de transmission,
La figure 2 montre une séquence de symboles à transmettre,
La figure 3 montre l'allure de pic de corrélation obtenu au niveau récepteur sur quelques trajets de propagation,
La figure 4 montre l'effet obtenu par un module d'alignement,
La figure 5 montre l'agencement des ligne de retard,
Les figures 6 et 7 montrent l'évolution du remplissage de ces lignes selon un premier cas,
La figure 8 montre la rupture de rythme dans le premier cas,
La figure 9 montre l'évolution du remplissage de ces lignes selon un deuxième cas,
La figure 10 montre la rupture de rythme dans le deuxième cas.

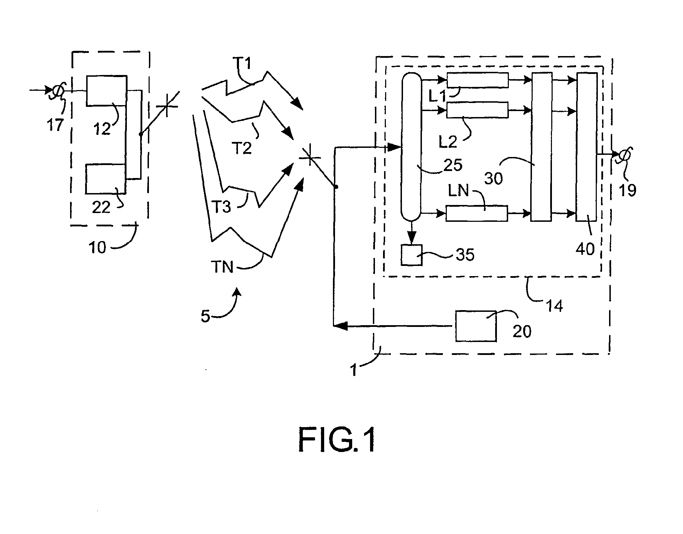

A la figure 1, on a représenté un appareil 1 conforme à l'invention faisant partie d'un système 5. Sur cette figure, on a représenté un deuxième appareil 10 avec lequel l'appareil 1 communique par une liaison à étalement de spectre par codes. La liaison entre les deux stations transmet des symboles dont le flux est constant. Chaque symbole transmis est formé d'un élément binaire haché par un code d'étalement de spectre formé de chips. La transmission qui s'effectue, par exemple depuis la partie émission 12 de la station 10 vers la partie réception 14 de la station 1 emprunte une multitude de trajets. Ainsi des données appliquées à une borne d'accès 17 de la partie émission 12 se retrouvent à une borne d'accès de sortie 19 de la partie réception 14. On considère seulement les trajets les plus importants : soient les trajets T1, T2, T3,... TN. Ces différents trajets constituent un canal de propagation à trajets multiples (TI,T2, ..., TN) dont le nombre N et les caractéristiques varient dans le temps. Dès lors, la station 1 reçoit un certain nombre de répliques du même flux de symboles transmis, mais décalées dans le temps. La partie réception 14 traite ces N trajets. D'une manière réciproque la station 1 comporte une partie émission 20 et la station 10, une partie réception 22. On ne considérera dans la suite que la transmission depuis la station 10 vers la station 1 impliquant les différents trajets T1à TN précités. A cet effet la partie réception 14 dispose de N lignes L1, L2,..LN, ou circuit de retard, préalablement synchronisées par le module de trajets 25 qui détecte les trajets et les synchronise afin de traiter indépendamment les N trajets présents dans le canal de propagation. Dans le cadre de l'exemple décrit, chacune de ces lignes effectue une opération de décorrélation du trajet sur lequel elle est synchronisée. En sortie de ces N lignes, un module d'alignement temporel 30 aligne selon le temps les signaux en sortie des lignes L1, L2,..LN de sorte que toutes les lignes du système sont synchronisées entre elles.

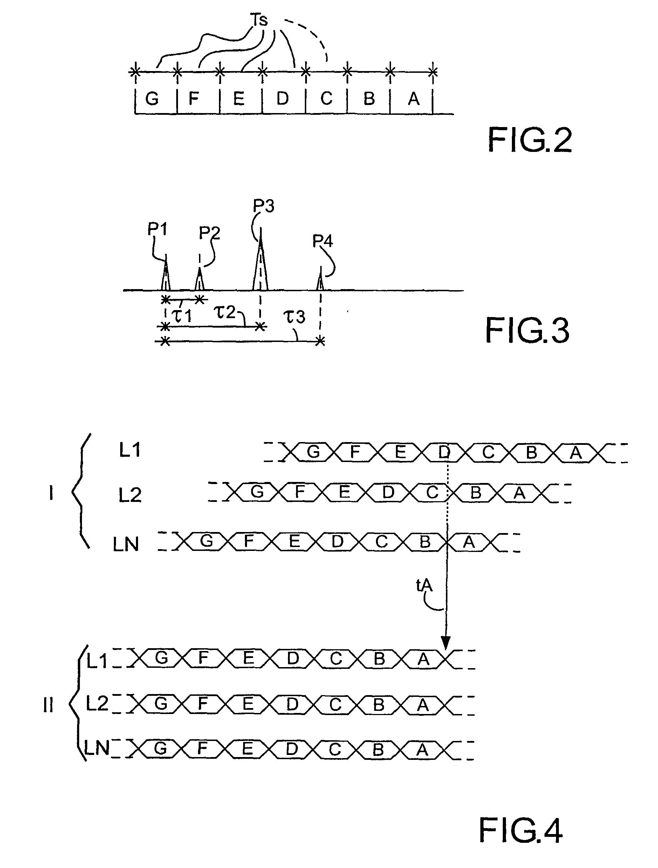

Le fonctionnement du module 25 est expliqué à l'aide des figures 2 et 3. La figure 2 montre une séquence de symboles transmis qui apparaissent dans l'ordre A, B, C, D,...F,G,...., ces symboles ont une durée Ts. Comme on utilise un étalement de spectre par code (CDMA) une corrélation de ces symboles, effectuée sur ces données, donne des pics de corrélation dont le nombre dépend des trajets de propagation. C'est ce qui est représenté à la figure 3. Après une premier pic de corrélation P1 on reçoit après un temps de propagation τ1 un second pic P2, après un temps τ2 un pic P3 et après un temps τ3 un picP4. Avec les différents temps de propagation on peut établir une table des symboles entrés dans les différentes lignes à retard L1 à LN. Par exemple si on considère la séquence montrée à la figure 2, on prend comme référence le symbole A. Ce symbole, qui est le premier ayant donné le pic de corrélation P1, est rentré dans la ligne L1, le symbole à rentrer dans la ligne Li dépend du temps qui s'est écoulé depuis l'apparition du pic P1.

Si TS<τi <2Ts le symbole emmagasiné dans la ligne sera B.

Si 2TS<τi <3Ts le symbole emmagasiné dans la ligne sera C, etc...

Une table 35 (Figure 1) permet d'établir les séquences de symboles contenus dans les lignes L1 à LN.

Conformément à l'invention, il est prévu un module de traitement de symbole 40 qui permet de résoudre le problème aux limites associées à ce module. Il tiendra compte des symboles à estimer en fonction de leur nombre qui est présent dans les lignes de retard L1 à LN.

### Définition du problème.

La figure 4 montre en I les signaux en entrées des lignes L1 à LN. Ces signaux montrent différentes données constituées par des symboles ordonnés référencés par :A, B, C, D, E, F, G... qui se présentent à l'entrée du module 30. La référence II montre les signaux à la sortie du module d'alignement 30.

Chaque ligne traite indépendamment un trajet reçu et retrouve cette même séquence de symboles, mais décalée dans le temps. En effet, sur la figure 4 en I, alors que la ligne LN a reçu le symbole A, la ligne L1 traite déjà le symbole D. Ainsi, pour effectuer correctement le processus d'alignement final de tous les trajets (lignes), il faut mémoriser chaque symbole sur chaque ligne jusqu'à ce que le trajet le plus en retard ait été traité à son tour. Une fois le dernier trajet traité pour un symbole donné, la sortie du module d'alignement est activée pour ce symbole et le processus d'alignement synchrone peut être entrepris. La figure 4 en II illustre ce principe, à l'instant tA, pour le symbole A qui est validé en sortie du module d'alignement une fois qu'il a été traité par la ligne LN.

Durant la communication, les trajets sont susceptibles d'apparaître ou de disparaître aléatoirement suivant les phénomènes de propagation rencontrés. D'autre part, l'apparition d'un nouveau trajet ou la disparition d'un ancien trajet peut se faire en avance, entre, ou en retard par rapport aux autres trajets déjà exploités par le système.

Par la suite pour la clarté de l'exposé, il ne sera mentionné que 4 lignes à retard.

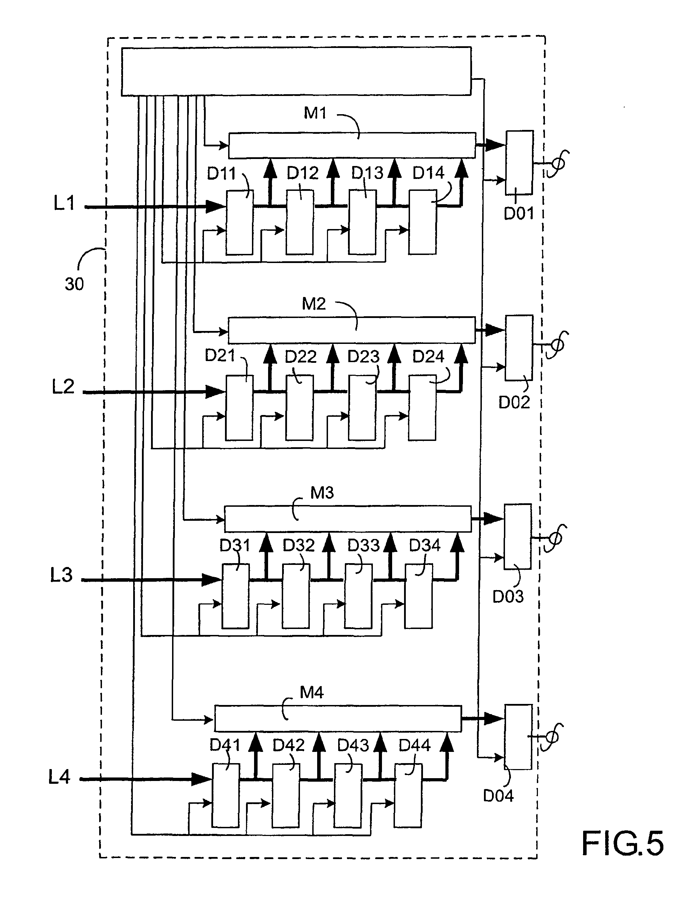

Le module d'alignement (30) montré à la figure 5 permet de traiter au mieux les effets des trajets qui apparaissent ou disparaissent. Il est composé de :
- 16 bancs de registres à décalage [D11 - D44] utilisés pour retarder les signaux en provenance des sorties de chaque ligne.
- 4 multiplexeurs de bus permettent de valider vers la sortie du module les 4 signaux correspondant au même symbole (exemple: 4A, 4B ... ).
- 1 module de gestion des multiplexeurs et des bancs de registres à décalages.

Le nombre des bancs de registres à décalages pour chaque ligne indique le nombre de symboles pouvant être mémorisés et par conséquent le retard maximal pouvant exister entre le premier et le dernier trajets traités. Ce nombre est fixé lors de la conception du système et doit donc être établi en fonction des conditions de propagations envisagées pour le canal.

A noter que chaque banc de registres [D11...D44 ; D21...D24 ; D31...D34 ;D41...D44) est contrôlé indépendamment pour chaque ligne alors que les bancs de registres [DO1 ... D04] sont contrôlés de façon synchrone pour toutes les lignes.

Le fonctionnement de ce module est expliqué à l'aide d'un exemple.

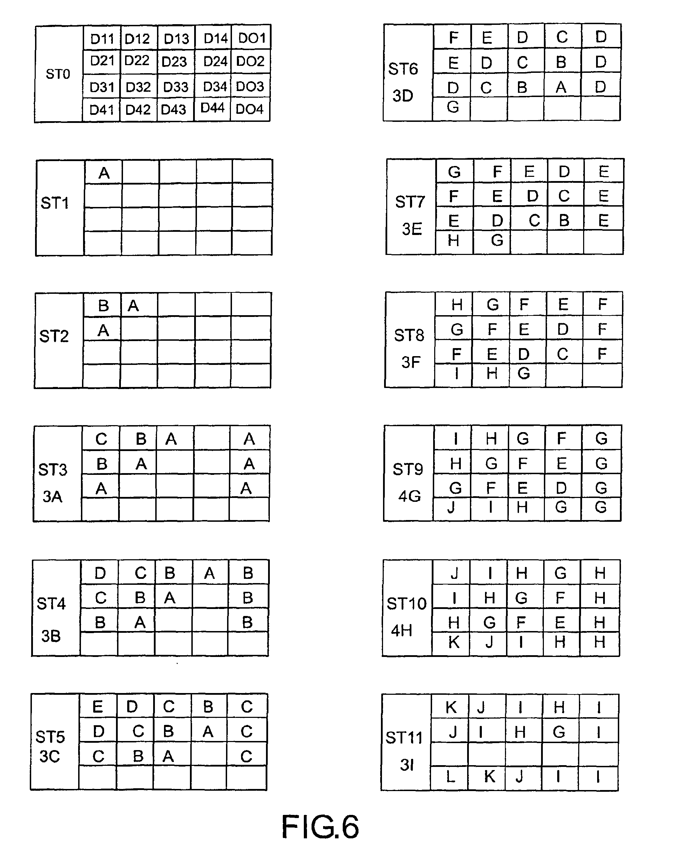

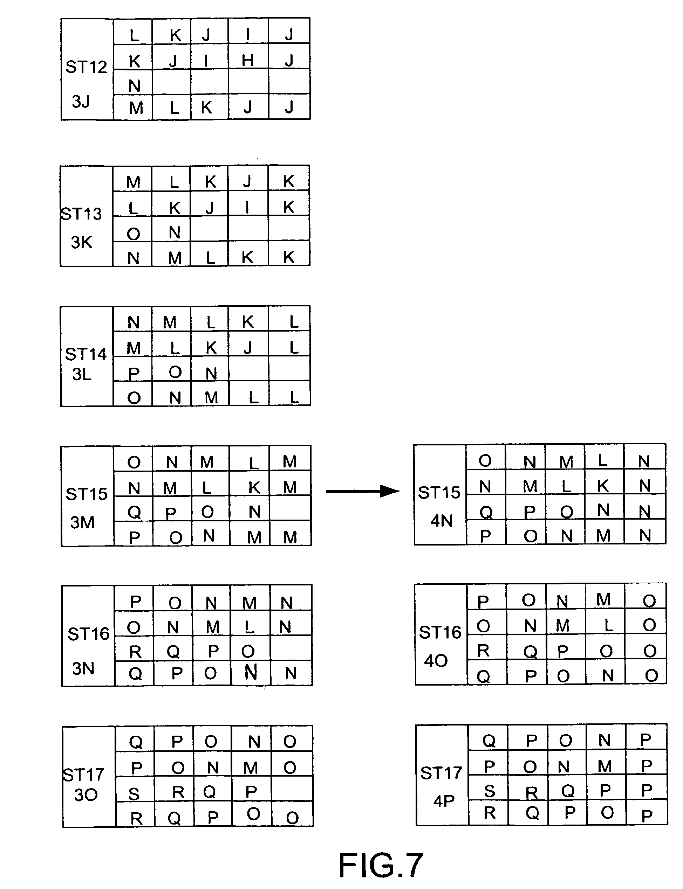

L'exemple explicité aux figures 6 et 7 illustre le fonctionnement du module d'alignement ; il permet de mettre en évidence les problèmes aux limites associées à ce système et amène à la description du principe qui fait l'objet de cette invention.

Sur cette figure sont représentés les sorties des bancs de registre[D11 ... D44], ainsi que les sorties des banc de registres [DO1 ... D04] en sortie du module d'alignement. Ceci est montré par le rectangle ST0 Les différentes étapes du déroulement temporel du processus sont ici représentées par les étapes de 1 à n référencés par les rectangles ST1 à STn respectivement.

La configuration choisie est de 4 bancs de registres par ligne et de 4 lignes indépendantes (N=4). Au départ du processus, seuls 3 trajets sont présents dans le canal de propagation.

A l'étape 1, le premier symbole A est reçu sur la 1ère ligne, il ne sera validé en sortie du module d'alignement qu'à l'étape 3, correspondant à l'arrivée de ce même symbole A sur la 3 ième et dernière ligne. Les trois A (3A) sont alors envoyés au module de traitement de symbole 40.

A l'étape 4, les 3B sont validés en sortie du module et ensuite les 3C à l'étape 5. A l'étape 6, la 4ième ligne est activée sur un nouveau trajet arrivant avant les 3 déjà en cours de traitement. Ce nouveau trajet est représenté par l'apparition du symbole G sur la dernière ligne. Il est à noter que la première ligne ne traite encore que le symbole F. Le 4 ième trajet n'est pris en compte qu'à l'étape 9 lorsque les quatre G sont activés sur la sortie du module d'alignement.

A l'étape 10, les 4H sont validés en sortie du module.

A l'étape 11, le 3ième trajet disparaît, il est remplacé à l'étape 12 (figure 7) par un nouveau trajet qui apparaît une fois de plus avant les trois autres déjà traités. L'observation des étapes 13 à 17 de la figure 7 nous montre alors qu'il devient impossible d'exploiter ce trajet si on conserve le processus que l'on vient de décrire. En effet la séquence des symboles obtenus restera toujours 3K, 3L, 3M, 3N, 3O ... au lieu de 3K, 3L, 3M, 4N, 4O.

### Explication du problème et présentation de la solution adoptée - double décision.

Le problème mis en évidence ici est un problème aux limites associées à tout système possédant une telle structure de bancs de registres. Dans notre exemple, le problème vient du fait que la 4ième ligne est déjà alignée sur le dernier banc de registres empêchant ainsi la prise en compte d'un nouveau trajet arrivant avant les autres. Dès lors la présence d'un banc de registres [Dl 5 ... D45] s'avère nécessaire, il est cependant impossible d'insérer ce banc de registres supplémentaire de part la nature figée du système.

La méthode qui va être décrite maintenant et qui fait l'objet de la présente invention permet de résoudre ce problème sans modifier la structure du système et la séquence des symboles transmis, sans altérer la qualité de la liaison.

Cette méthode découle d'une observation des configurations de registres en figure 7. En effet, à l'étape 15, on s'aperçoit qu'on dispose dans les bancs de registres, à la fois de 3M et de 4N. Or, à cet instant, pour assurer un flux de données correctes, la décision doit se faire sur les 3M et non sur les 4N. L'idée de l'invention est ici de faire une double décision, à la fois sur les 3M et sur les 4N. A l'étape 16, il devient alors possible de continuer par 40, puis 4P à l'étape 17 et ainsi de suite sur un rythme normal. Le flux de données peut alors être représenté par la figure 7. On remarque une fois de plus que cette méthode est entièrement basée sur l'utilisation des données originelles et n'altère en rien la qualité de la liaison.

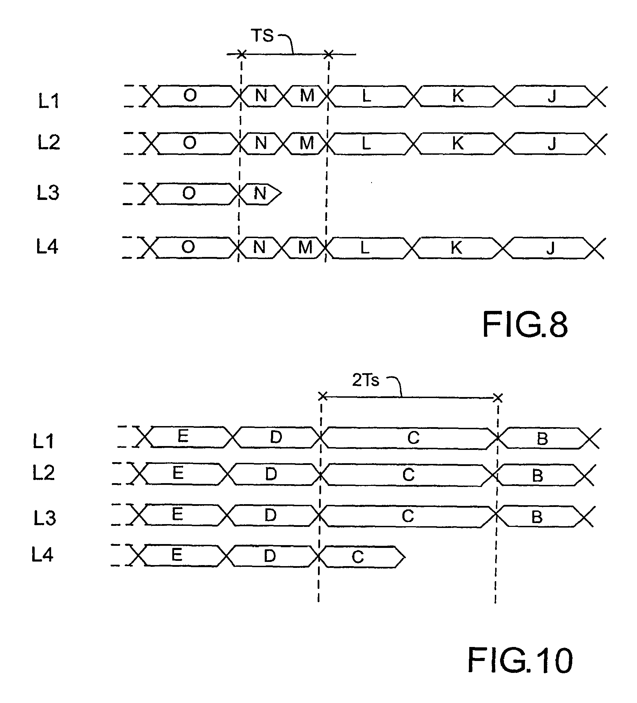

La figure 8 montre la rupture de rythme. Les symboles M et N sont traités tous les deux dans une seule durée TS.

### Autre cas de figure de l'effet de bord - absence de décision.

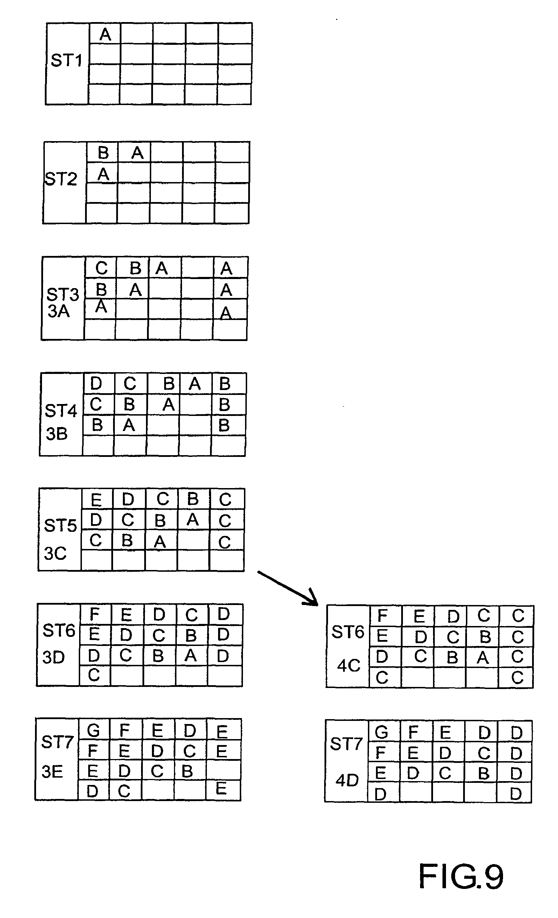

La figure 9 présente le même effet de bord mais appliqué au cas où les trajets apparaissent toujours après ceux déjà en cours de traitement. Les premières étapes, de 1 à 5, sont identiques aux précédentes de la figure 6. A l'étape 6, un nouveau trajet, en retard sur les trajets déjà traités, est pris en compte. Si aucun processus particulier n'est appliqué, ce nouveau trajet ne pourra pas, lui non plus, être validé en sortie. Là encore l'observation de la configuration des bancs de registres montre qu'à l'étape 6, on dispose à la fois de 4C et de 3D avec une décision à faire sur D. A l'étape 7, on a 4D et 3E avec une décision sur E. Si à l'étape 6, aucune décision n'est faite, il devient alors possible de récupérer les 4D à l'étape 7, puis les 4E à l'étape 8 et ainsi de suite. Là encore, aucune altération n'est portée au flux de données, qui peut maintenant être représenté par la figure 10.

Ces ruptures apparentes de rythme sont souvent sans inconvénient pour les circuits d'utilisation. En effet les symboles sont estimés au niveau du circuit de traitement de symbole 40.

Le procédé qui est mis en oeuvre dans l'invention peut être résumé de la façon suivante à l'aide des étapes suivantes :
- détermination de la réception du premier symbole,
- enregistrement de ce premier symbole dans un premier circuit à retard,
- enregistrement de N symboles reçus après ce premier dans chacun des circuits à retards,
- examen de la majorité d' un symbole d'une séquence à l'apparition d'un trajet et/ou à sa disparition,
- fourniture à l'utilisation de symbole à un rythme plus rapide ou plus lent en fonction de ladite apparition/disparition.

## Revendications

1. Station de radio (1) comportant un récepteur (14) pour recevoir des informations transmises par symboles selon une pluralité de trajets (T1, T2, ..., TN), le récepteur comprenant :
- un module de trajets (25) pour détecter les trajets et les synchroniser afin de traiter chaque trajet indépendamment,
- une pluralité de circuits de retards (L1, L2, .., LN) pour recevoir les informations provenant de chacun des trajets, les informations de chaque trajet étant traitées par un circuit de retard particulier afin de fournir une séquence de symboles propre au trajet, les séquences de symboles ainsi fournies étant identiques mais décalées dans le temps,
- un module d'alignement (30) comprenant pour chaque circuit de retard:
- une série de bancs de registres à décalage (D11-D14 ; D21-D24 ; D31-D34 ; D41-D44) pour stocker une série de symboles successives, chaque banc de registres fournissant un symbole particulier de cette série,
- un multiplexeur de bus (M1 ; M2 ; M3 ; M4) pour sélectionner un banc de registres afin de prendre le symbole fourni par ce banc de registres comme symbole de sortie,
- un circuit de traitement (40) pour traiter les symboles de sortie du module d'alignement afin de reproduire les informations transmises,
**caractérisée en ce que** récepteur comprend :
- un module de gestion des multiplexeurs de bus et des bancs de registres à décalage pour modifier une configuration de bancs de registres sélectionnés dans le module d'alignement suite à la détection d'un nouveau trajet afin d'assurer qu'un symbole étant majoritairement présent dans les bancs de registres à décalage soit pris comme symbole de sortie, la configuration de bancs de registres sélectionnés étant modifiée de telle sorte que le module d'alignement fournit deux symboles consécutifs dans une seule période de symbole dans le cas où le nouveau trajet est en avance sur les autres trajets déjà mémorisés et le premier symbole du nouveau trajet est arrivé dans le dernier registre de sa série et le dernier banc de registres d'une des autres séries est sélectionné, tandis que le module d'alignement fournit un même symbole dans deux périodes de symboles consécutives dans le cas où le nouveau trajet est en retard sur les autres trajets déjà mémorisés et le premier symbole du nouveau trajet est arrivé dans le premier registre de sa série et le premier banc de registres d'une des autres séries est sélectionné.

2. Station de radio selon la revendication 1, la station fonctionnant selon un mode CDMA.

3. Procédé de réception pour recevoir des informations transmises par symboles selon une pluralité de trajets (T1, T2, ..., TN), le procédé impliquant un récepteur comprenant :
- une pluralité de circuits de retards (L1, L2, .., LN) pour recevoir les informations provenant de chacun des trajets, les informations de chaque trajet étant traitées par un circuit de retard particulier afin de fournir une séquence de symboles propre au trajet, les séquences de symboles ainsi fournies étant identiques mais décalées dans le temps,
- un module d'alignement (30) comprenant pour chaque circuit de retard:
- une série de bancs de registres à décalage (D11-D14 ; D21-D24 ; D31-D34 ; D41-D44) pour stocker une série de symboles successives, chaque banc de registres fournissant un symbole particulier de cette série,
- un multiplexeur de bus (M1 ; M2 ; M3 ; M4) pour sélectionner un banc de registres afin de prendre le symbole fourni par ce banc de registres comme symbole de sortie,
- un circuit de traitement (40) pour traiter les symboles de sortie du module d'alignement afin de reproduire les informations transmises,
**caractérisé en ce que** le procédé comprend :
- une étape de détection de trajet dans laquelle un nouveau trajet est détecté,
- une étape de gestion des multiplexeurs de bus et des bancs de registres à décalage, dans laquelle une configuration de registres sélectionnés dans le module d'alignement est modifiée suite à la détection du nouveau trajet afin d'assurer qu'un symbole étant majoritairement présent dans les bancs de registres à décalage soit pris comme symbole de sortie, la configuration de bancs de registres sélectionnés étant modifiée de telle sorte que le module d'alignement fournit deux symboles consécutifs dans une seule période de symbole dans le cas où le nouveau trajet est en avance sur les autres trajets déjà mémorisés et le premier symbole du nouveau trajet est arrivé dans le dernier registre de sa série et le dernier banc de registres d'une des autres séries est sélectionné, tandis que le module d'alignement fournit un même symbole dans deux périodes de symboles consécutives dans le cas où le nouveau trajet est en retard sur les autres trajets déjà mémorisés et le premier symbole du nouveau trajet est arrivé dans le premier registre de sa série et le premier banc de registres d'une des autres séries est sélectionné.

## Claims

1. A radio station (1) comprising a receiver (14) for receiving information streams transmitted in symbols along a plurality of paths (T1, T2, ..., TN), the receiver comprising:
- a path module (25) for detecting the paths and synchronizing them in order to process each path independently,
- a plurality of delay circuits (L1, L2, ..., LN) for receiving the information streams coming from each of the paths, the information streams of each path being processed by a particular delay circuit in order to produce a symbol sequence belonging to the path, the symbol sequences thus produced being identical, but shifted with time,
- an alignment module (30) comprising for each delay circuit:
- a series of banks of shift registers (D11 - D 14; D21 - D24; D31 - D34; D41 - D44) for storing a series of successive symbols, each bank of shift registers producing a particular symbol of this series,
- a bus multiplexer (M1; M2; M3; M4) for selecting a bank of registers in order to take the symbol produced by this bank of registers as an output symbol,
- a processing circuit (40) for processing the output symbols of the alignment module in order to reproduce the transmitted information streams,
**characterized in that** the receiver comprises:
- a management module for managing the bus multiplexers and banks of shift registers to modify a configuration of selected banks of registers in the alignment module following the detection of a new path in order to ensure that a symbol for the greater part present in the banks of shift registers is taken as an output symbol, the configuration of selected banks of registers being modified such that the alignment module produces two consecutive symbols in a single symbol period in the case where the new path is selected which is in advance with respect to the other paths already stored and the first symbol of the new path has arrived in the first register of its series and the last bank of registers of one of the other series, whereas the alignment module produces a same symbol in two consecutive symbol periods in the case where the new path is selected which is lagging with respect to the other paths already stored and the first symbol of the new path has arrived in the first register of its series and the first bank of registers of one of the other series.

2. A radio station as claimed in claim 1, which station operates in accordance with a CDMA mode.

3. A receiving method for receiving information streams transmitted by way of symbols along a plurality of paths (T1, T2, ..., TN), the method implying a receiver that comprises:
- a plurality of delay circuits (L1, L2, ..., LN) for receiving the information streams coming from each of the paths, the information streams of each path being processed by a particular delay circuit in order to produce a symbol sequence belonging to the path, the symbol sequences thus produced being identical, but shifted with time,
- an alignment module (30) comprising for each delay circuit:
- a series of banks of shift registers (D 11 - D 14; D21 - D24; D31 - D34; D41 - D44) for storing a series of successive symbols, each bank of shift registers producing a particular symbol of this series,
- a bus multiplexer (M1; M2; M3; M4) for selecting a bank of registers in order to take the symbol produced by this bank of registers as an output symbol,
- a processing circuit (40) for processing the output symbols of the alignment module in order to reproduce the transmitted information streams,
**characterized in that** the method comprises:
- a step of path detection in which a new path is detected,
- a management step of managing the bus multiplexers and banks of shift registers, in which step a configuration of selected banks of registers in the alignment module is modified following the detection of the new path in order to ensure that a symbol for the greater part present in the banks of shift registers is taken as an output symbol, the configuration of selected banks of registers being modified such that the alignment module produces two consecutive symbols in a single symbol period in the case where the new path is selected which is in advance with respect to the other paths already stored and the first symbol of the new path has arrived in the first register of its series and the last bank of registers of one of the other series, whereas the alignment module produces a same symbol in two consecutive symbol periods in the case where the new path is selected which is lagging with respect to the other paths already stored and the first symbol of the new path has arrived in the first register of its series and the first bank of registers of one of the other series.

## Patentansprüche

1. Funkstation (1) mit einem Empfänger (14) für den Empfang der durch Symbole übertragenen Informationen gemäß mehreren Wegen (T1, T2, ..., TN), wobei der Empfänger umfasst:
- ein Wegmodul (25) für das Erkennen der Wege und ihre Synchronisation, um jeden Weg unabhängig zu verarbeiten,
- mehrere Verzögerungsschaltungen (L1, L2, ..,LN) für den Empfang der Informationen von jedem der Wege, wobei die Informationen jedes Wegs durch eine besondere Verzögerungsschaltung verarbeitet werden, um eine Sequenz wegeigener Symbole bereitzustellen, wobei die auf diese Weise bereitgestellten Symbolsequenzen identisch aber zeitverschoben sind.
- ein Ausrichtungsmodul (30), umfassend für jede Verzögerungsschaltung:
- eine Reihe von Schieberegisterbanken (D11-D14; D21-D24; D31-D34; D41-D44) zur Speicherung einer Reihe aufeinanderfolgender Symbole, wobei jede Registerbank ein besonderes Symbol dieser Reihe bereitstellt.
- einen Bus-Multiplexer (M1; M2, M3, M4) zur Auswahl einer Registerbank, um das von dieser Registerbank bereitgestellte Symbol als Ausgangssymbol zu nehmen,
- eine Verarbeitungsschaltung (40) zur Verarbeitung der Ausgangssymbole des Ausrichtungsmoduls, um die übertragenen Informationen zu vervielfältigen,
**dadurch gekennzeichnet, dass** der Empfänger umfasst:
- ein Modul zur Verwaltung der Bus-Multiplexer und der Schieberegisterbanken, um eine Konfiguration von Registerbanken zu ändern, die im Ausrichtungsmodul im Anschluss an das Erkennen eines neuen Wegs ausgewählt werden, um zu gewährleisten, dass ein Symbol, das mehrheitlich in den Schieberegisterbanken vorhanden ist, als Ausgangssymbol genommen wird, wobei die Konfiguration ausgewählter Registerbanken derart geändert wird, dass das Ausrichtungssymbol zwei aufeinanderfolgende Symbole in einer einzigen Symbolperiode bereitstellt für den Fall, dass der neue Weg in Bezug auf die anderen bereits gespeicherten Wege vorzeitig da ist und das erste Symbol des neuen Wegs im letzten Register seiner Reihe angekommen ist und die letzte Registerbank einer der anderen Reihen ausgewählt wird, während das Ausrichtungsmodul ein gleiches Symbol in den zwei aufeinanderfolgenden Symbolperioden bereitstellt für den Fall, dass der neue Weg in Bezug auf die anderen bereits gespeicherten Wege zeitverzögert ist und das erste Symbol des neuen Wegs im letzten Register seiner Reihe angekommen ist und die letzte Registerbank einer der anderen Reihen ausgewählt wird.

2. Funkstation nach Anspruch 1, wobei die Station gemäß einer DDMA-Betriebsart arbeitet.

3. Empfangsverfahren für den Empfang der durch Symbole übertragenen Informationen gemäß mehrerer Wege (T1, T2, ..., TN), wobei das Verfahren einen Empfänger voraussetzt, umfassend:
- mehrere Verzögerungsschaltungen (L1, L2, .., LN) für den Empfang der von jedem der Wege kommenden Informationen, wobei die Informationen jedes Wegs durch eine besondere Verzögerungsschaltung verarbeitet werden, um eine Sequenz wegeigener Symbole bereitzustellen, wobei die auf diese Weise bereitgestellten Sequenzen von Symbolen identisch aber zeitverschoben sind,
- ein Ausrichtungsmodul (30), umfassend für jede Verzögerungsschaltung:
- eine Reihe von Schieberegisterbanken (D11-D14; D21-D24; D31-D34; D41-D44), um eine Reihe aufeinanderfolgender Symbole zu speichern, wobei jede Registerbank ein besonderes Symbol dieser Reihe bereitstellt,
- einen Bus-Multiplexer (M1; M2; M3; M4) zur Auswahl einer Registerbank, um das von dieser Registerbank bereitgestellte Symbol als Ausgangssymbol zu nehmen,
- eine Verarbeitungsschaltung (40) zur Verarbeitung der Ausgangssymbole des Ausrichtungsmoduls, um die übertragenen Informationen zu vervielfältigen,
**dadurch gekennzeichnet, dass** das Verfahren umfasst:
- einen Wegerkennungsschritt, in dem ein neuer Weg erkannt wird,
- einen Verwaltungsschritt der Bus-Multiplexer und der Schieberegisterbanken, in dem eine Konfiguration von in dem Ausrichtungsmodul ausgewählten Registern im Anschluss an das Erkennen des neuen Wegs ausgewählt wird, um zu gewährleisten, dass ein Symbol, das mehrheitlich in den Schieberegisterbanken vorhanden, ist als Ausgangssymbol genommen wird, wobei die Konfiguration ausgewählter Registerbanken derart geändert wird, dass das Ausrichtungssymbol zwei aufeinanderfolgende Symbole in einer einzigen Symbolperiode bereitstellt für den Fall, dass der neue Weg in Bezug auf die anderen bereits gespeicherten Wege vorzeitig da ist und das erste Symbol des neuen Wegs im letzten Register seiner Reihe angekommen ist und die letzte Registerbank einer der anderen Reihen ausgewählt wird, während das Ausrichtungsmodul ein gleiches Symbol in den zwei aufeinanderfolgenden Symbolperioden bereitstellt für den Fall, dass der neue Weg in Bezug auf die anderen bereits gespeicherten Wege zeitverzögert ist und das erste Symbol des neuen Wegs im letzten Register seiner Reihe angekommen ist und die letzte Registerbank einer der anderen Reihen ausgewählt wird.
